## Europäisches Patentamt
## European Patent Office
## Office européen des brevets

(19)

(11) Veröffentlichungsnummer: **0 220 717**
**B1**

(12) # EUROPÄISCHE PATENTSCHRIFT

(45) Veröffentlichungstag der Patentschrift:
**01.02.89**

(51) Int. Cl.⁴: **B23K 11/32, B21D 51/38**

(21) Anmeldenummer: **86114959.9**

(22) Anmeldetag: **28.10.86**

(54) Schweissmaschine zum Anschweissen von Laschen an Blechteile.

(30) Priorität: **30.10.85 CH 4672/85**

(43) Veröffentlichungstag der Anmeldung:
**06.05.87 Patentblatt 87/19**

(45) Bekanntmachung des Hinweises auf die Patenterteilung:
**01.02.89 Patentblatt 89/5**

(84) Benannte Vertragsstaaten:
**CH DE ES FR GB GR IT LI NL SE**

(56) Entgegenhaltungen:
**AT-B- 370 350**
**US-A- 3 683 834**

(73) Patentinhaber: **ELPATRONIC AG, Baarerstrasse 117, CH-6300 Zug(CH)**

(72) Erfinder: **Kramer, Felix, Im Aemmet 3, CH-8964 Friedlisberg(CH)**

(74) Vertreter: **Hotz, Klaus, Dipl.-El.-Ing. / ETH, c/o SOUDRONIC AG Industriestrasse 35 Postfach 11, CH-8962 Bergdietikon(CH)**

## Beschreibung

Die Erfindung betrifft eine Schweissmaschine zum Anschweissen von Laschen an Blechteile, insbesondere aufreissbare Dosenteile, mit einem Blechförderer, mit dem Blechteile taktweise hintereinander durch eine Schweissstation hindurchbewegbar sind, einer Positioniervorrichtung, mit der die Blechteile in einer definierten Stellung in der Schweissstation festsetzbar sind, einem Stempel zum Abstanzen einer vorgestanzten Lasche von einem Blechstreifen und einem Laschenförderer, der mindestens eine Aufnahme für eine Lasche aufweist, die aus dem Arbeitsbereich des Stempels in die Schweissstation bewegbar ist, wodurch die Laschen auf den Arbeitstakt des Blechförderers abgestimmt in der Schweissstation an jeweils ein Blechteil anlegbar sind.

Eine solche Schweissmaschine ist Gegenstand der älteren, europäischen Patentanmeldung EP-A1 0 196 494 der Anmelderin.

Der vorliegenden Erfindung liegt die Aufgabe zugrunde, eine Schweissmaschine dieser Gattung derart weiterzubilden, dass sie imstande ist, die Laschen besonders genau positioniert an die Blechteile anzuschweissen.

Diese Aufgabe ist erfindungsgemäss dadurch gelöst, dass dem Stempel zum Abstanzen der Laschen eine Vorstanzvorrichtung vorgeschaltet ist, die in festgelegten Abständen von den Laschen Markierungen in den Blechstreifen einstanzt, zwischen der Vorstanzvorrichtung und dem genannten Stempel ein Antriebsglied angeordnet ist, das die Markierungen des Blechstreifens erfasst und durch ein Getriebe mit dem Laschenförderer verbunden ist, und der genannte Stempel mit einer Zentriervorrichtung verbunden ist, die beim Abstanzen einer Lasche in mindestens eine ihr benachbarte Markierung des Blechstreifens eingreift.

Die erfindungsgemässe Schweissmaschine ist vorzugsweise entsprechend mindestens einem der Unteransprüche weitergebildet.

Ein Ausführungsbeispiel der Erfindung wird im folgenden anhand schematischer Zeichnungen mit weiteren Einzelheiten erläutert. Es zeigt:

Fig. 1 die Draufsicht einer erfindungsgemässen Schweissmaschine,
Fig. 2 einen vergrösserten Ausschnitt aus Fig. 1,

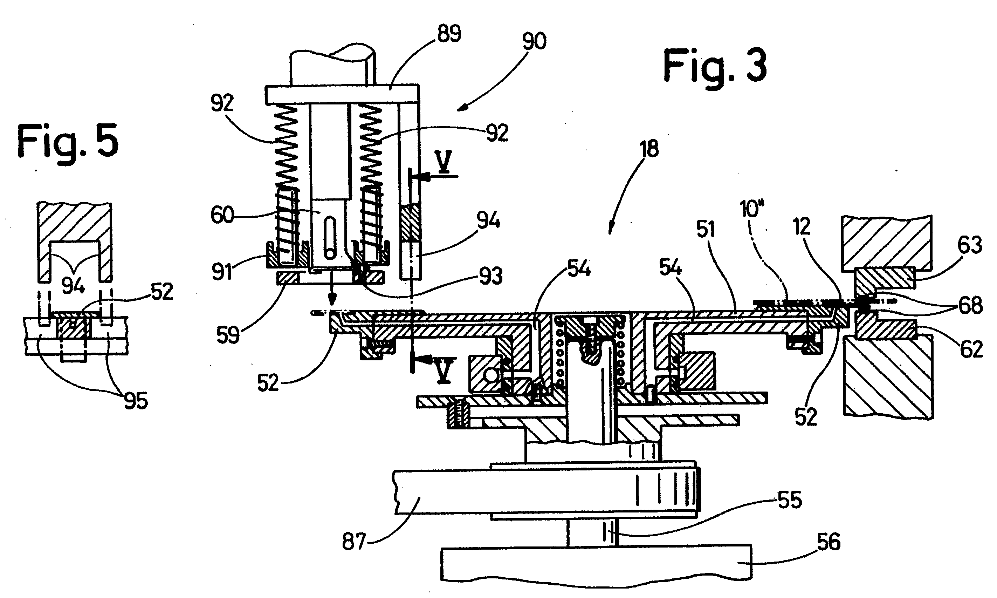

Fig. 3 den senkrechten Schnitt III–III in Fig. 2,

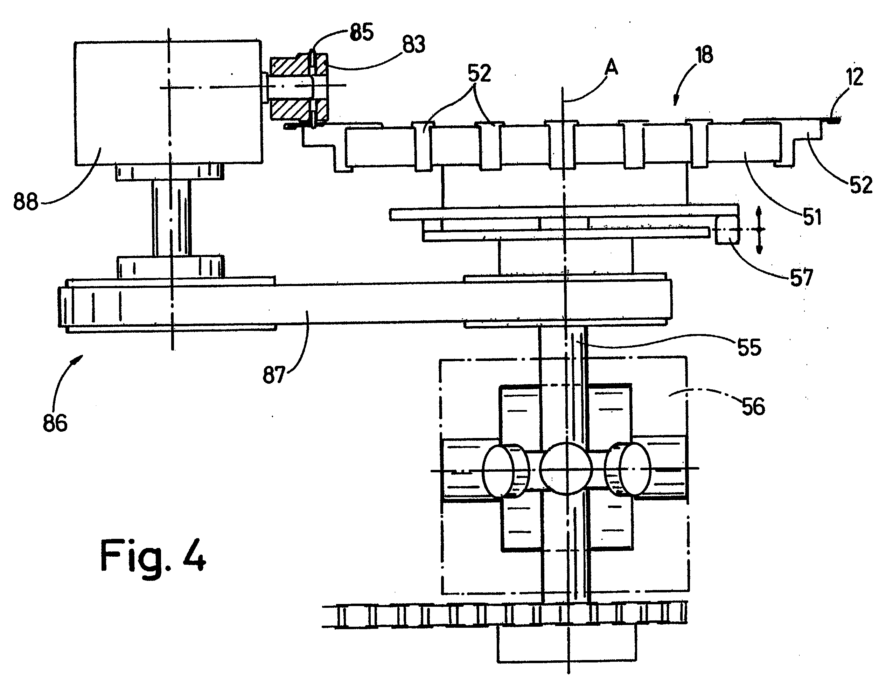

Fig. 4 den senkrechten Schnitt IV–IV in Fig. 2 und
Fig. 5 den senkrechten Schnitt V–V in Fig. 3

Die dargestellte Schweissmaschine hat die Aufgabe, rechteckige Blechteile 10 aus Weissblech von beispielsweise 0,2 mm Dicke mit je einem zu den Längsseiten der Blechteile parallelen Aufreissstreifen 11 zu versehen und an ein Ende des Aufreissstreifens eine Lasche 12 anzuschweissen. Der Maschine ist ein Magazin 13 zugeordnet, in dem die Blechteile 10 gestapelt bereitgehalten werden. Oberhalb des Magazins 13 ist ein Abstapler 14 angeordnet, und an diesen schliesst sich ein Blechförderer 15 an, der die Blechteile 10 nacheinander in einer waagerechten Ebene weiterfördert. Dem Blechförderer 15 ist eine Prägestation 16 zum Prägen der Aufreissstreifen 11 zugeordnet, und daran schliesst sich eine Positioniervorrichtung 17 an, welche die Blechteile 10 nacheinander in einer genau vorbestimmten Lage im Arbeitsbereich eines Prägewerkzeuges 43, eines Laschenförderers 18 und einer Schweissvorrichtung 19 festhält.

Der Abstapler 14 ist pneumatisch gesteuert und hat ein Paar Saugnäpfe 25, die sich zu Beginn jedes Arbeitstaktes der Schweissmaschine an der Oberseite des obersten im Magazin 13 bereitgehaltenen Blechteils 10 festsaugen, dieses Blechteil aus dem Magazin nach oben herausziehen und es auf dem Blechförderer 15 ablegen.

Der Blechförderer 15 weist mehrere Gruppen von unteren Rollen 31 und oberen Rollen 32 auf, die um je eine waagerechte Achse drehbar sind. Die Achsen der unteren Rollen 31 erstrecken sich im rechten Winkel zu den Längskanten der Blechteile 10; die oberen Rollen 32 sind unter einem kleinen Winkel zu den unteren Rollen 31 derart angeordnet, dass sie jedes zwischen den Rollen 31 und 32 hindurchlaufende Blechteil 10 mit einer seiner beiden Längskanten an einer seitlichen Begrenzung 33 anliegend halten. Die seitliche Begrenzung 33 ist, wie angedeutet, von einer geradlinigen Reihe senkrecht gelagerter Rollen gebildet. Die unteren Rollen 31 sind ortsfest gelagert; einige von ihnen sind von einem nicht dargestellten Motor drehantreibbar.

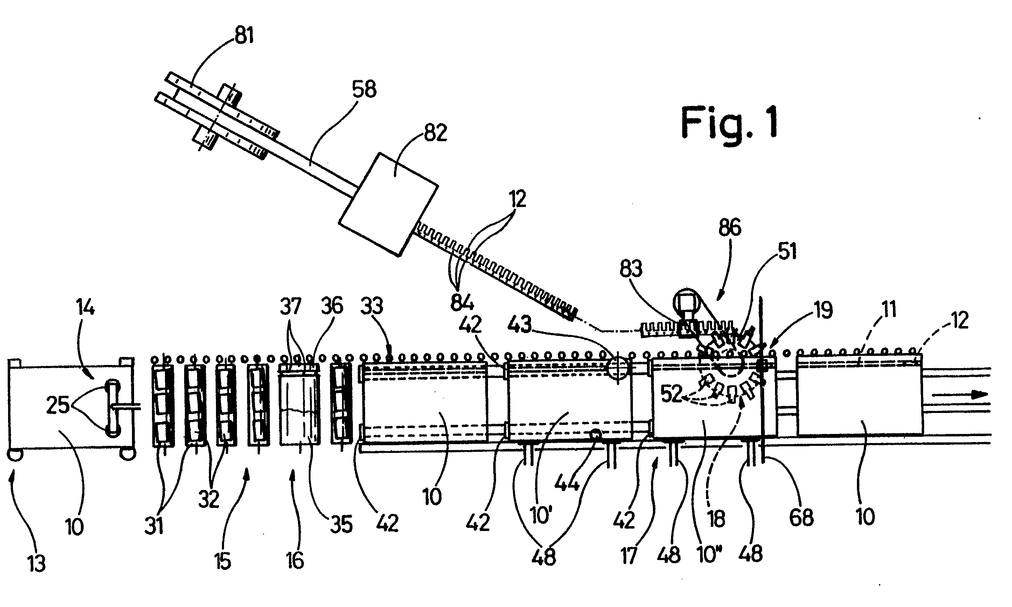

Zur Prägestation 16 gehören eine hinter der vierten oberen Rolle 32 rechtwinklig zur Begrenzung 33 gelagerte kräftige Stützwalze 35 und eine darunter parallel dazu gelagerte Prägewalze 36, welche von der Stützwalze 35 in Fig. 1 teilweise verdeckt ist. Die Prägewalze 36 trägt zwei kreisringförmige Schneiden 37. Stützwalze 35 und Prägewalze 36 sind mit einer auf die Umfangsgeschwindigkeit der unteren Rollen 31 abgestimmten Geschwindigkeit drehantreibbar und prägen in jedes zwischen ihnen hindurchlaufende Blechteil 10 parallel zu dessen Längskanten einen Aufreissstreifen 11 ein.

Zur Positioniervorrichtung 17 gehören paarweise angeordnete Mitnehmer 42, die in Förderrichtung des Blechförderers 15 schrittweise bewegbar sind. Zwei Mitnehmer 42 greifen bei jedem Arbeitszyklus der Schweissmaschine hinter ein Blechteil 10, das zwischen Stützwalze 35 und Prägewalze 36 hindurchgelaufen ist, und schieben das Blechteil 10 nacheinander in zwei genau vorbestimmte Positionen 10' und 10", von denen die erste Position 10' im Arbeitsbereich eines Prägewerkzeugs 43 liegt während die zweite Position 10" in der Schweissstation 19 liegt. Seitlich angeordnete pneumatisch andrückbare Anschläge 48 sorgen dafür, dass das Blechteil 10 in beiden Positionen 10' und 10" an der seitlichen Begrenzung 33 anliegt. In der Position 10' prägt das Prägewerkzeug 43 quer über den Aufreissstreifen 11 eine Querritzung, die beim Öffnen einer aus dem Blechteil 10 hergestellten Dose das Anreissen des Aufreissstreifens 11 erleichtern soll. Das Eintreffen eines Blechteils 10 in der Position 10' wird von einem Sensor 44 festgestellt, der von bekannter, im Prinzip beliebiger Bauart ist.

Zum Laschenförderer 18 gehört eine im wesentlichen waagerechte, kreisförmige Platte 51, die um eine senkrechte Achse A schrittweise um jeweils 30° drehbar ist und in Umfangsabständen von ebenfalls 30° je eine nach oben offene Aufnahme 52 für eine Lasche 12 aufweist. In den Aufnahmen 52 mündet je ein Saugkanal 54, der an eine Unterdruckquelle angeschlossen ist. Die Platte 51 ist an einer senkrechten Welle 55 befestigt, die über eine Getriebe 56 drehantreibbar sowie über eine Hubvorrichtung 57 heb- und senkbar ist.

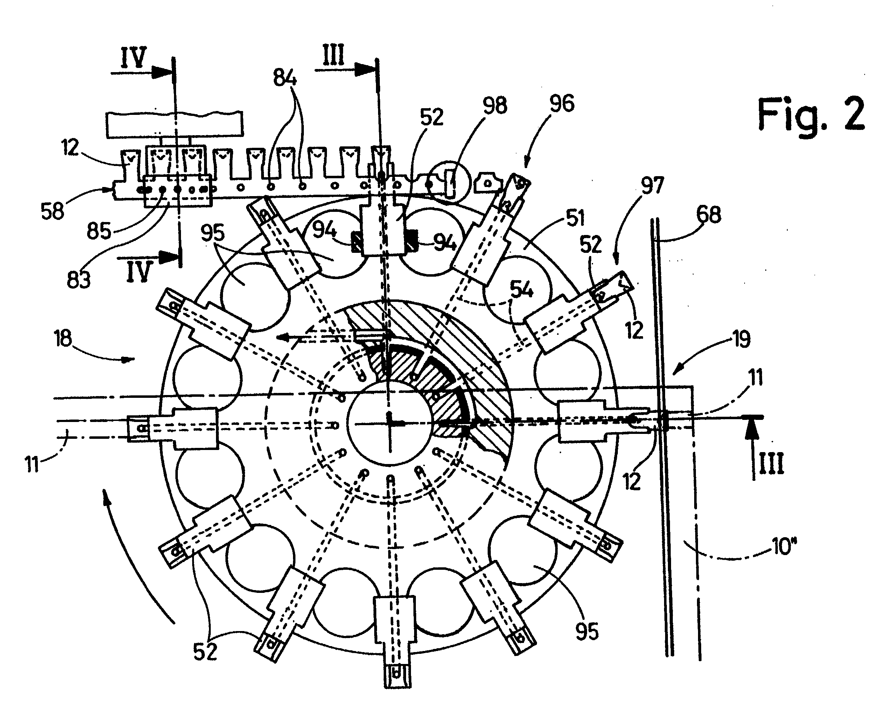

Längs einer Tangente an die kreisförmige Platte 51 ist ein Blechstreifen 58 geführt, an dem in vorbestimmten Abständen je eine Lasche 12 vorgestanzt ist. Das freie Ende jeder Lasche 12 ist in Form eines Dreiecks umgeschlagen. Der Blechstreifen 58 ist in seiner Längsrichtung schrittweise bewegbar, so dass bei jedem Arbeitszyklus der Schweissmaschine die vorderste noch mit dem Blechstreifen verbundene Lasche 12 über einer der Aufnahmen 52 zu liegen kommt, und zwar derart, dass diese Lasche sich gemäss Fig. 2 radial in Bezug zur Achse A erstreckt und ihr umgeschlagenes Ende radial ausserhalb der betreffenden Aufnahme 52 liegt. Das radial innere, noch mit dem Blechstreifen 58 verbundene Ende dieser Lasche 12 liegt zwischen einer Stanzmatrize 59 und einem auf- und abbeweglichen Stempel 60, der die Lasche vom Blechstreifen 58 abtrennt und sie in der zugehörigen Aufnahme 52 ablegt, wo sie durch den Unterdruck des Saugkanals 54 festgehalten wird.

In der Schweissstation 19 sind zwei Schweisselektroden 62 und 63 senkrecht übereinander angeordnet. Zwischen der oberen Schweisselektrode 63 und dem unter ihr positionierten Blechteil 10 sowie zwischen der unteren Schweisselektrode 62 und der über ihr noch in der erwähnten Aufnahme 52 gehaltenen Lasche 12 ist je ein quer zu den Aufreissstreifen 11 verlaufender Abschnitt eines Elektrodendrahts 68 angeordnet. Der Elektrodendraht 68 hat einen abgeplatteten, rechteckähnlichen Querschnitt und ist über nicht dargestellte Umlenkrollen geführt und schrittweise bewegbar.

Bei jedem Arbeitszyklus der Schweissmaschine führt die untere Schweisselektrode 62 einen Aufwärtshub aus, wobei über die beiden genannten Abschnitte des Elektrodendrahts 68 sowie die Lasche 12 und das Blechteil 10 ein Stromkreis geschlossen und die Lasche 12 mit dem Aufreissstreifen 11 des betreffenden Blechteils 10 verschweisst wird. Unmittelbar darauf führt der Laschenförderer 18 einen Abwärtshub aus, so dass er die angeschweisste Lasche 12 freigibt.

Der Blechstreifen 58 wird von einer nicht dargestellten Haspel abgezogen und läuft gem. Fig. 1 über eine Umlenkrolle 81 und sodann durch eine Vorstanzvorrichtung 82 und ein Antriebsglied 83, ehe er den Laschenförderer 18 und den Stempel 60 erreicht. In der Vorstanzvorrichtung 82 werden die Laschen 12 derart vorgestanzt, dass sie noch mit einem schmalen, ununterbrochen durchlaufenden Randbereich des Blechstreifens 58 zusammenhängen. In diesen verbleibenden Randbereich des Blechstreifens 58 stanzt die Vorstanzvorrichtung 82 Markierungen 84, die im dargestellten Beispiel von kreisförmigen Löchern gebildet sind, aber auch von Einprägungen oder einer Verzahnung gebildet sein könnten. Je eine der Markierung 84 ist genau mittig zwischen zwei benachbarten Laschen 12 angeordnet, wie vor allem Fig. 2 erkennen lässt.

Das Antriebsglied 83 ist eine Walze mit in gleichmässigen Winkelabständen radial angeordneten Stiften 85, die in je eine der Markierungen 84 eingreifen, wodurch ein fester Zusammenhang zwischen der Vorwärtsbewegung des Blechstreifens 58 und der Drehung des Antriebsgliedes 83 hergestellt wird. Die Welle 55 des Laschenförderers 18 ist über ein Getriebe 86 mit dem Antriebsglied 83 verbunden. Das Getriebe 86 besteht im dargestellten Beispiel aus einem Zahnriementrieb 87 und einem Winkeltrieb 88 und sorgt dafür, dass zwischen der Drehung des Antriebsgliedes 83 und somit auch der Vorwärtsbewegung des Blechstreifens 58 einerseits und der Drehung des Laschenförderers 18 andererseits ein bestimmter, genau reproduzierbarer Zusammenhang besteht.

Der Stempel 60 ist an einer Tragplatte 89 befestigt, die von einer nicht dargestellten Hubvorrichtung jeweils in den Stillstandszeiten des schrittweise drehbaren Laschenförderers 18 auf- und abbewegbar ist. An der Tragplatte 89 hängt neben dem Stempel 60 eine Zentriervorrichtung 90 mit einer Niederhalteplatte 91, die am Stempel 60 geführt und über Federn 92 an der Tragplatte 89 abgestützt ist. An der Unterseite der Niederhalteplatte 91 sind zwei senkrechte Stifte 93 befestigt, deren Abstand voneinander ebenso gross ist wie der Abstand zwischen aufeinanderfolgenden Markierungen 84.

Bei jedem Abwärtshub des Stempels 60 greifen die beiden Stifte 93 in die beiden Markierungen 84 beiderseits derjenigen Lasche 12 ein, die beim weiteren Abwärtshub des Stempels 60 vom Blechstreifen 58 abgetrennt werden soll. Im unteren Totpunkt des Stempels 60 liegt die Niederhalteplatte 91 auf derjenigen Aufnahme 52 des Laschenförderers 18 auf, in der die abgestanzte Lasche 12 abgelegt werden soll.

Um eine genaue Lagezuordnung zwischen Lasche 12 und Aufnahme 52 herzustellen, hat die Zentriervorrichtung 90 ferner einen an der Tragplatte 89 befestigten gabelartigen Teil mit zwei Zinken 94, die beim Abwärtshub an Seitenflächen der genannten Aufnahme 52 nach unten gleiten und in je eine Aussparung 95 der Platte 51 eintauchen, wie in Fig. 2 dargestellt. Beim Aufwärtshub des Stempels 60 sorgt die Niederhalteplatte 91 zusammen mit dem in der Aufnahme 52 herrschenden Unterdruck dafür, dass die abgestanzte Lasche 12 in der Aufnahme unverrückt liegen bleibt.

Sobald die Zinken 94 die genannte Aufnahme 52 freigegeben haben, wird der Laschenförderer 18 um einen Winkel von 30° gedreht, wobei eine Toleranz von ±0,01° eingehalten wird. Auf diese Weise gelangt die Aufnahme 52 mit der abgestanzten Lasche 12 in eine Kontrollstation 96, in der mit üblichen, beispielsweise optischen Mitteln festgestellt wird, ob die Lasche 12 vorhanden ist. Sollte dies nicht der Fall sein, würde die Maschine selbsttätig abgeschaltet.

Bei positivem Ergebnis der Kontrolle wird der Laschenförderer 18 um einen weiteren Schritt von 30°

gedreht, wodurch die genannte Aufnahme 52 mit der abgestanzten Lasche 12 in eine Ausblasstation 97 gelangt. Hier endet eine Druckluftleitung, die von einem Ventil derart gesteuert wird, dass Druckluft austritt und die Lasche 12 wegbläst, falls in der Positioniervorrichtung 17 nicht in der vorgesehenen Weise ein Blechteil 10 in die Position 10' einen Schritt vor der Schweissvorrichtung 19 gelangt sein sollte.

Wenn der Sensor 44 das Eintreffen eines Blechteils 10 in der Position 10' festgestellt hat, werden die seitlichen Anschläge 48 betätigt, so dass sie die Blechteile in den Positionen 10' und 10" an die seitliche Begrenzung 33 andrücken. Anschliessend führt das Prägewerkzeug 43 einen Arbeitshub aus, wodurch der Aufreissstreifen 11 des Blechteils in der Position 10' mit seiner Querritzung versehen wird. Daraufhin bewegen die Mitnehmer 42 die Blechteile 10 um je einen Schritt weiter, wodurch das soeben vom Prägewerkzeug 43 bearbeitete Blechteil aus der Position 10' in die Position 10" gelangt. Gleichzeitig wird der Laschenförderer 18 um weitere 30° gedreht, so dass die genannte Aufnahme 52 mit der abgestanzten Lasche 12 in die Schweissstation 19 gelangt und nun mit dem Aufreissstreifen 11 des in der Position 10" bereitliegenden Blechteils verschweisst werden kann.

Der von den Laschen 12 befreite Rest des Blechstreifens 58 wird von einer weiteren Stanzvorrichtung 98 zerhackt.

## Patentansprüche

1. Schweissmaschine zum Anschweissen von Laschen (12) an Blechteile (10), insbesondere aufreissbare Dosenteile, mit
- einem Blechförderer (15), mit dem Blechteile (10) taktweise hintereinander durch eine Schweissstation (19) hindurchbewegbar sind,
- einer Positioniervorrichtung (17), mit der die Blechteile (10) in einer definierten Stellung in der Schweissstation (19) festsetzbar sind,
- einem Stempel (60) zum Abstanzen einer vorgestanzten Lasche (12) von einem Blechstreifen (58),
- einem Laschenförderer (18), der mindestens eine Aufnahme (52) für eine Lasche (12) aufweist, die aus dem Arbeitsbereich des Stempels (60) in die Schweissstation (19) bewegbar ist, wodurch die Laschen (12) auf den Arbeitstakt des Blechförderers (15) abgestimmt in der Schweissstation (19) an jeweils ein Blechteil (10) anlegbar sind, dadurch gekennzeichnet, dass
- dem Stempel (60) zum Abstanzen der Laschen (12) eine Vorstanzvorrichtung (82) vorgeschaltet ist, die in festgelegten Abständen von den Laschen (12) Markierungen (84) in den Blechstreifen (58) einstanzt,
- zwischen der Vorstanzvorrichtung (82) und dem genannten Stempel (60) ein Antriebsglied (83) angeordnet ist, das die Markierungen (84) des Blechstreifens (58) erfasst und durch ein Getriebe (86) mit dem Laschenförderer (18) verbunden ist, und
- der genannte Stempel (60) mit einer Zentriervorrichtung (90) verbunden ist, die beim Abstanzen einer Lasche (12) in mindestens eine ihr benachbarte Markierung des Blechstreifens (58) eingreift.

2. Schweissmaschine nach Anspruch 1, dadurch gekennzeichnet, dass die Vorstanzvorrichtung (82) zum gleichzeitigen Vorstanzen je mindestens einer Lasche (12) und je mindestens einer Markierung (84) in Form eines mittig zwischen aufeinanderfolgenden Laschen angeordneten Lochs ausgebildet ist.

3. Schweissmaschine nach Anspruch 1, dadurch gekennzeichnet, dass das Antriebsglied (83) als Walze mit Stiften (85) zum Eingreifen in die Markierung (84) ausgebildet ist.

4. Schweissmaschine nach Anspruch 1, dadurch gekennzeichnet, dass die mit dem Stempel (60) verbundene Zentriervorrichtung (90) gabelartig mit zwei Zinken (94) ausgebildet ist, die bei jedem Arbeitshub des Stempels (60) eine Aufnahme (52) des Laschenförderers (18) umgreifen, welche die vom Blechstreifen (58) abzustanzende Lasche (12) aufnimmt.

## Claims

1. A welding machine for welding tongues (12) onto sheet-metal members (10), particularly tear-open can members, having
- a sheet-metal conveyor (15) whereby sheet-metal members (10) can be moved rhythmically through a welding station (19), one behind the other,
- a positioning device (17) whereby the sheet-metal members (10) can be located in a defined position in the welding station (19),
- a punch (60) to punch off a prestamped tongue (12) from a sheet-metal strip (58),
- a tongue conveyor (18) which comprises at least one receiver (52) for a tongue (12), which is movable out of the range of action of the punch (60) into the welding station (19) as a result of which the tongues (12) can each be laid against a sheet-metal member (10) in the welding station (19) in time with the sheet-metal conveyor (15), characterised in that
- the punch (60) for punching off the tongues (12) is preceded by a prestamping device (82) which impresses markings (84) in the sheet-metal strip (58) at fixed distances from the tongues (12),
- disposed between the prestamping device (82) and the said punch (60) is a drive member (83) which detects the markings (84) of the sheet-metal strip (58) and is connected by a transmission (86) to the tongue conveyor (18), and
- the said punch (60) is connected to a centering device (90) which engages in at least one marking of the sheet-metal strip (58) which is adjacent to it, during the punching off of a tongue (12).

2. A welding machine as claimed in claim 1, characterised in that the prestamping device (82) is adapted for the simultaneous prestamping of at least one tongue (12) and at least one marking (84) in the form of a hole disposed midway between successive tongues.

3. A welding machine as claimed in claim 1, characterised in that the drive member (83) is constructed in the form of a roller with pins (85) for engagement in the markings (84).

4. A welding machine as claimed in claim 1, characterised in that the centering device (90), connected to the punch (60) is of fork-like construction with two tines (94) which engage, during each working stroke of the punch (60), round a receiver (52) of the tongue conveyor (18) which receives the tongue (12) to be punched off from the sheet-metal strip (58).

## Revendications

1. Machine pour souder des pattes (12) sur des pièces en tôle (10), en particulier sur des parties de boîtes frangibles, comprenant:
– un transporteur de tôles (15) à l'aide duquel les pièces en tôle (10) peuvent être successivement entraînées pas à pas, à travers un poste de soudage (19);
– un dispositif de positionnement (17) à l'aide duquel les pièces de tôle (10) peuvent être immobilisées dans une position définie dans le poste de soudage (19);
– un poinçon (60) destiné à détacher une patte (12) prédécoupée dans une bande de tôle (58);
– un transporteur de pattes (18), qui présente au moins un logement (52) destiné à recevoir une patte (12) et qui peut être placé de la zone de travail du poinçon (60) dans le poste de soudage (19) de sorte que les pattes (12) peuvent être appliquées chacune sur une pièce en tôle (10) dans le poste de soudage (19), à des instants coordonées au rythme de fonctionnement du transporteur de tôles (15), caractérisée en ce que:
– en amont du poinçon (60) destiné à séparer les pattes (12), est placé un dispositif de prédécoupage (82) qui positionne des repères (84) dans la bande de tôle (58) à des distances définies des pattes (12);
– en ce qu'un organe d'entraînement (83) est disposé entre le dispositif de prédécoupage (82) et ce poinçon (60), pour détecter les repères (84) de la bande de tôle (58) et est relié au transporteur de pattes (18) par l'intermédiaire d'un mécanisme (86); et en ce que
– ce poinçon (60) est relié à un dispositif de centrage (90) qui, lors du tronçonnage d'une patte (12) s'engage dans au moins un repère de la bande de tôle (58) qui lui est voisin.

2. Machine pour souder selon la revendication 1, caractérisée en ce que le dispositif de prédécoupage (82) est destiné à découper simultanément au moins une patte (12) et au moins un repère (84) sous la forme d'un trou disposé en position médiane entre deux pattes consécutives.

3. Machine pour souder selon la revendication 1, caractérisée en ce que l'organe d'entraînement (83) est constitué par un rouleau muni de doigts (85) destinés à s'engager dans les repères (84).

4. Machine pour souder selon la revendication 1, caractérisée en ce que le dispositif de centrage (90) associé au poinçon (60) présente la forme d'une fourche munie de deux dents (94) qui, à chaque cycle de fonctionnement du poinçon (60), encadrent un logement (52) du transporteur de pattes (18) qui reçoit une patte (12) à découper dans la bande de tôle (58).

Fig. 1

Fig. 2

Fig.5

Fig.3

Fig. 4